# EUROPÄISCHE PATENTSCHRIFT

(11) **EP 1 184 712 B1**
(45) Veröffentlichungstag und Bekanntmachung des Hinweises auf die Patenterteilung: **18.10.2006**
(21) Anmeldenummer: 01120972.3
(22) Anmeldetag: 31.08.2001
(51) Int. Cl.: G02C 9/00, G02C 5/12

(54) **Kombinationsbrille**
Combination eyeglasses
Lunettes à combinaison

(30) Priorität: 02.09.2000 DE 20015202 U
(43) Veröffentlichungstag der Anmeldung: 06.03.2002
(73) Patentinhaber: Schmidt-Betschel, Wolfram, 34537 Bad Wildungen (DE)
(72) Erfinder: Schmidt-Betschel, Wolfram, 34537 Bad Wildungen (DE)
(74) Vertreter: Freiherr von Schorlemer, Reinfried

(56) Entgegenhaltungen:
- WO-A-92/10778
- DE-U- 20 015 202
- DE-U- 29 813 367
- FR-A- 1 093 372
- GB-A- 1 042 133
- US-A- 2 842 029
- US-A- 4 810 080
- US-A- 5 790 230
- US-A- 5 929 963

## Beschreibung

Die Erfindung betrifft eine Kombinationsbrille mit einem Schutzglashalter und einem Korrekturglashalter.

Personen, die Brillen mit Korrekturgläsern tragen müssen, erhalten in der Regel nur dann ein optimal scharfes Bild, wenn ihr Blick durch die optischen Zentren der Korrekturgläser fällt, wie dies beim Geradeaus-Sehen normalerweise der Fall ist. Durchdringen die die Lichtstrahlen dagegen, bevor sie auf die Augen treffen, überwiegend exzentrisch zu den optischen Zentren verlaufende Bereiche der Korrekturgläser, dann ergeben sich aus physikalischen Gründen Linsenfehler wie z. B. prismatische Nebenwirkungen oder chromatische und sphärische Aberrationen.

Besonders störend sind derartige Linsenfehler bei der Ausübung verschiedener Sportarten, z. B. wenn der Sportler aufgrund einer vorgegebenen Körperhaltung dazu gezwungen ist, nicht durch die optischen Zentren, sondern z. B. durch Bereiche in der Nähe der oberen Ränder der Korrekturgläser zu blicken. Dies gilt z. B. für den Radrennsport, bei dem der Sportler mit weit nach vorn gebeugtem Oberkörper auf dem Rennrad sitzt und trotz gesenktem Kopf eine freie Geradeaus-Sicht benötigt. Fehlt diese aufgrund der exzentrisch zu den optischen Mittelpunkten erfolgenden Durchsicht durch die Korrekturgläser, werden die Sehschärfe und das räumliche Sehvermögen reduziert. Als Folge davon werden z. B. Kurvenradien, Geschwindigkeiten, Entfernungen und Abstände falsch eingeschätzt und Kurven mit verschlechterter Leistung durchfahren, wodurch eine erhöhte Unfallgefahr entsteht.

Zur Ermöglichung einer angenäherten Geradeaus-Sicht bei unterschiedlichen Körperhaltungen sind Brillen bekannt, die einen mit Seitenbügeln versehenen, z. B. als übliches Brillengestell ausgebildeten Korrekturglashalter aufweisen, an dem eine zur Positionierung des Korrekturglashalters bestimmte, mit sogenannten Pads versehene Nasenstütze in der Höhe verstellbar montiert ist (DE 84 12 777 U1, DE 35 15 741 A1, DE 88 05 529 U1, DE 197 07 899 A1). Daneben sind auch bereits Brillen mit eingebauten Spiegelsystemen vorgeschlagen worden (DE 195 30 337 A1), die zwar denselben Zweck erfüllen können, aber vergleichsweise aufwendig sind. Außerdem lassen sich beide Lösungen nicht ohne weiteres auf sogenannte Kombinationsbrillen übertragen, bei denen der Korrekturglashalter auf der Rückseite eines Halters für Schutzgläser montiert ist, die bei vielen Anwendungen, insbesondere im Bereich des Sports, zusätzlich gewünscht oder benötigt werden, um Schutz gegen Verletzungen oder äußere Einflüsse wie z. B. Sonneneinstrahlung oder Fahrtwind zu bieten. Bekannte Kombinationsbrillen dieser Art enthalten entweder einen Schutzglashalter, an dem die Nasenstütze und der Korrekturglashalter fest fixiert sind, oder einen mit einer fest fixierten Nasenstütze versehenen Korrekturglashalter, an dessen Vorderseite ein zusätzlicher Schutzglashalter vertikal verschiebbar gelagert ist (siehe z.B. US 4,810, 080 A). Keine dieser beiden Varianten ermöglicht auch bei unterschiedlichen Kopfhaltungen die oben erläuterte Geradeaus-Sicht durch die optischen Zentren der Korrekturgläser.

Der Erfindung liegt daher das technische Problem zugrunde, eine Kombinationsbrille der beschriebenen Art vorzuschlagen, bei der sich die Korrekturgläser auf einfache Weise an unterschiedliche Kopfhaltungen bzw. Blickrichtungen anpassen lassen.

Zur Lösung dieses Problems enthält eine erfindungsgemäße Kombinationsbrille die Merkmale gemäß Anspruch 1.

Durch die erfindungsgemäße Kombinationsbrille wird unter anderem der Vorteil erzielt, daß der Schutzglashalter zusammen mit den Seitenbügeln und der Nasenstütze ein Grundgestell bildet, das mit allen zur Positionierung am Kopf des Brillenträgers benötigten Elementen versehen, entsprechend den jeweiligen Anforderungen ausgebildet und unabhängig von der momentanen Kopf- bzw. Körperhaltung in stets gleicher Weise am Kopf des Trägers positioniert werden kann. Dagegen braucht der Korrekturglashalter selbst weder eine Nasenstütze noch Seitenbügel oder dgl., sondern nur die auf den jeweiligen Brillenträger abgestimmten Korrekturgläser aufweisen, so daß er vergleichsweise einfach und leicht ausgebildet und mit einfachen Mitteln in einem hinter dem Schutzglashalter freigelassenen Raum vertikal verschiebbar angeordnet werden kann.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch die Anwendung einer Brille beim Radrennsport mit einer vergrößerten Einzelheit X;
Fig. 2 einen Schutzglashalter einer erfindungsgemäßen Kombinationsbrille von vorn;
Fig. 3 in einer schematischen, seitlich-perspektivischen Ansicht eine Einzelheit des Schutzglashalters nach Fig. 2;
Fig. 4 eine Ansicht des Schutzglashalters nach Fig. 2 von innen;
Fig. 5 die Innenansicht einer am Schutzglashalter nach Fig. 4 befestigten Führung als Einzelteil;
Fig. 6 eine Unteransicht der Führung nach Fig. 5;
Fig. 7 die Innenansicht eines Korrekturglashalters einer erfindungsgemäßen Kombinationsbrille;
Fig. 8 eine Seitenansicht eines am Korrekturglashalter nach Fig. 7 befestigten Führungsstegs als Einzelteil; und
Fig. 9 die Innenansicht der erfindungsgemäßen Kombinationsbrille bei am Schutzglashalter nach Fig. 4 montiertem Korrekturglashalter nach Fig. 7.

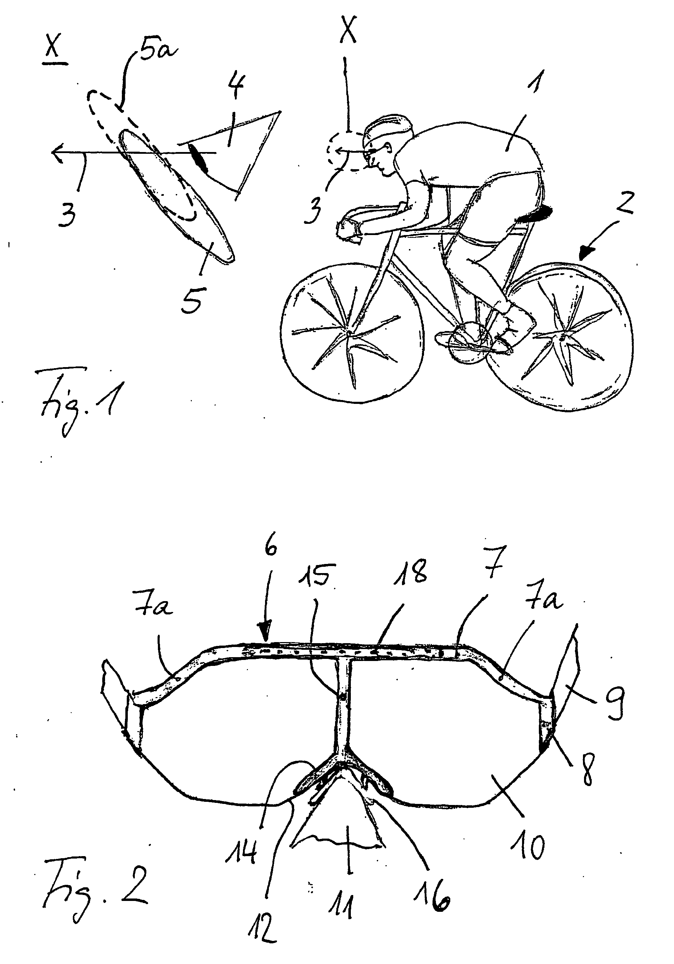

Fig. 1 zeigt schematisch einen eine Korrekturbrille tragenden Radrennfahrer 1 in seiner typischen Körperhaltung auf einem Rennrad 2. Wie im linken Teil der Fig. 1 in der vergrößerten Einzelheit X dargestellt ist, versucht der Radrennfahrer 1, trotz der nach vorn und unten geneigten Kopfhaltung geradeaus zu blicken, wie durch einen Pfeil 3 angedeutet ist. Als Folge davon blickt er mit seinen schematisch angedeuteten Augen 4 nicht durch die optischen Zentren von optischen Gläsern bzw. Korrekturgläsern 5, sondern meistens durch oberhalb der optischen Zentren und in der Nähe der oberen Ränder der Korrekturgläser 5 gelegene Randzonen. Dadurch entstehen die eingangs erläuterten Abbildungsfehler.

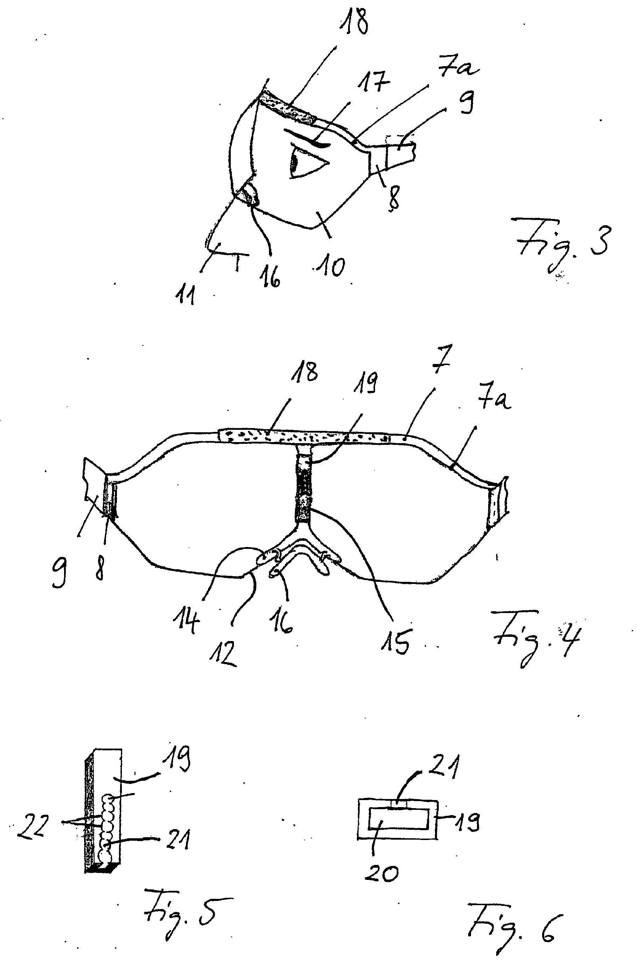

Zur Vermeidung derartiger Abbildungsfehler weist eine erfindungsgemäße Kombinationsbrille einen Schutzglashalter 6 nach Fig. 2 auf. Dieser enthält im Ausführungsbeispiel zwei seitlich angeordnete, durch einen Quersteg 7 fest miteinander verbundene Anlenkstellen 8, an die wie bei üblichen Brillen schwenkbare Seitenbügel 9 angelenkt sind. Die Seitenbügel 9 können, wie nicht näher dargestellt ist, in der Länge verstellbar und als Normal- oder Sportbügel ausgebildet sein.

An den Anlenkstellen 8 und/oder am Quersteg 7 ist ein transparentes, bei Bedarf getöntes Schutzglas 10 vorzugsweise auswechselbar befestigt, das z. B. zwischen den Anlenkstellen 9 durchgehend ausgebildet ist und in einem unteren, mittleren Bereich eine zur Aufnahme einer nur schematisch angedeuteten Nase 11 des Trägers bestimmte, V-förmige Ausnehmung 12 aufweist. An dem unteren Rand dieser Ausnehmung 12 grenzen zwei auf der Rückseite des Schutzglases 10 angeordnete, nach Art eines umgekehrten V angeordnete Haltestege 14, die an einem mittleren, vorzugsweise senkrecht zum Quersteg 7 verlaufenden und fest mit diesem verbundenen Mittelsteg 15 des Schutzglashalters 6 befestigt sind. An den einander zugewandten Innenflächen dieser Haltestege 14 sind sogenannte Pads 16 (Nasenauflagen) befestigt, die aus einem weichen, flexiblen Material bestehen und dem Zweck dienen, die Kombinationsbrille weich auf der Nase 11 des Trägers abzustützen und zu positionieren. Die Haltestege 14, der Mittelsteg 15 und die Pads 16 bilden gemeinsam eine Nasenstütze der Kombinationsbrille.

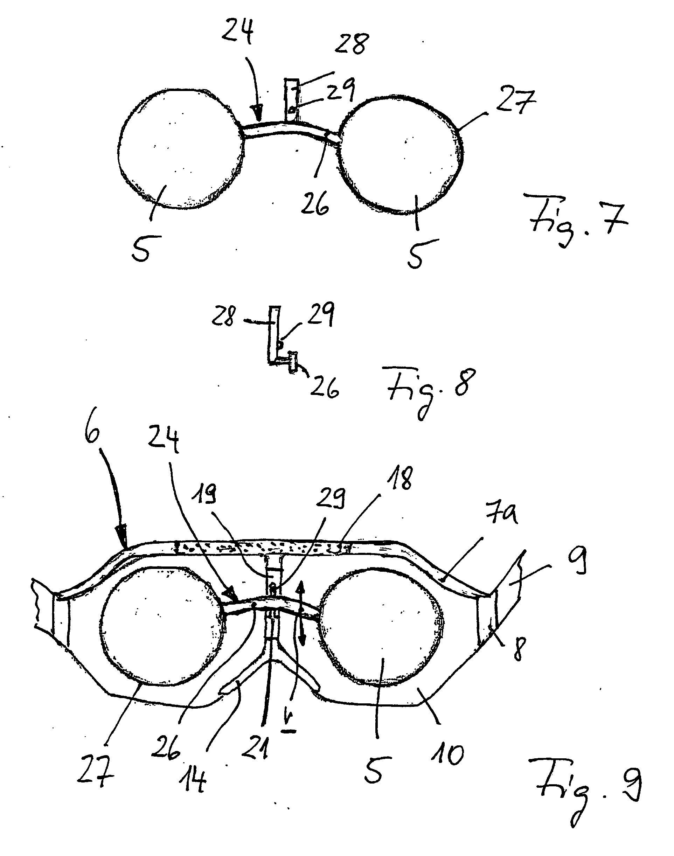

Nach einem besonders bevorzugten, in Fig. 2 und 3 dargestellten Ausführungsbeispiel der Erfindung ist der Quersteg 7 des Schutzglashalters 6 so ausgebildet und angeordnet, daß er beim bestimmungsgemäßen Tragen der Brille am Kopf des Trägers an einer oberhalb der Augenbrauen befindlichen Stelle der Stirn zu liegen kommt. Dies ist schematisch in Fig. 3 angedeutet, wo die Augenbrauen mit dem Bezugszeichen 17 versehen sind, und wird z. B. dadurch erreicht, daß der Quersteg 7 an seinen Enden über nach unten gebogene Abschnitte 7a (Fig. 2) mit den Anlenkstellen 8 verbunden und daher in einem mittleren und insbesondere oberhalb der Augen 4 angeordneten Abschnitt gegenüber den Seitenbügeln 9 erhöht angeordnet ist. Anders als bei Anwendung herkömmlicher Brillen liegt daher auch der obere Rand des Schutzglases 10 oberhalb der Augenbrauen 17, so daß der Träger der Brille in jeder Kopfstellung bzw. bei jeder Blickrichtung (Pfeil 3 in Fig. 1) nur durch das Schutzglas 10 blickt bzw. der Quersteg 7 unsichtbar bleibt. Die Sicht des Trägers der Brille wird daher in keiner Weise durch den Quersteg 7 behindert.

Nach den Seiten und nach unten hin kann das Schutzglas 10 um die Schläfen herum bzw. bis unter die Augen des Brillenträgers herab so weit erstreckt sein, wie es zur Ermöglichung einer ungestörten Rundumsicht zweckmäßig ist. Aus demselben Grund ist der Quersteg 7 zweckmäßig entsprechend lang und der Mittelsteg 15 entsprechend schmal ausgebildet.

Auf der Rückseite bzw. Innenseite des Querstegs 7 und insbesondere in einem mittleren Teil davon ist vorzugsweise eine Auflage 18 aus einem gut saugfähigen Material wie z. B. Schaum- oder Textilstoff angebracht. Die Länge dieser Auflage 18 kann, symmetrisch zu beiden Seiten des Mittelstegs 15, z. B. 75 % der Länge des Querstegs 7 betragen. Dadurch wird eine verbesserte und direkte Schweißabsaugung für den auf der Stirn entstehenden Schweiß erhalten. Ist die Länge der Auflage 18 kleiner als die des Querstegs 7, entstehen beidseitig von ihr zusätzlich Lüftungsschlitze. Infolge dieser Konstruktion sammelt sich im Bereich der Augenbrauen 17 weniger Schweiß an, der sonst auf die weiter unten beschriebenen Korrekturgläser 5 oder das Schutzglas 10 tropfen und dadurch die Sicht erheblich behindern könnte. Durch Wahl der parallel zum Mittelsteg 15 gemessenen Breite der Auflage 18 sowie die Lage des Querstegs 7 oberhalb der Augenbrauen 17 kann eine Optimierung der Schweißabsaugung ohne Beeinträchtigung des Sichtfeldes erzielt werden.

Wie Fig. 4 zeigt, ist der Mittelsteg 15 auf seiner Innenseite mit einer beim Tragen der Brille vertikal angeordneten Führung 19 versehen, die gemäß Fig. 5 und 6 einen nach unten offenen Führungskanal 20 aufweist, der auf seiner Rückseite (Innenseite) von einem nach unten offenen Schlitz 21 begrenzt ist. In einander zugewandten, den Schlitz 21 begrenzenden Seitenflächen der Führung 19 sind Rastmulden 22 ausgebildet, die in Längsrichtung des Mittelstegs 15 in einem vorgewählten Abstand angeordnet sind.

Gemäß Fig. 7 weist die erfindungsgemäße Kombinationsbrille außerdem einen Halter 24 für die auch aus Fig. 1 ersichtlichen optischen Korrekturgläser 5 auf. Der Halter 24 ist z. B. nach Art einer üblichen Brillenfassung ausgebildet und mit zwei durch einen quer verlaufenden Steg 26 verbundenen, kreisrunden, die Korrekturgläser 5 in sich aufnehmenden Einfassungsteilen 27 versehen. Der Steg 26 ist am oberen Ende und in einem Mittelabschnitt mit einem senkrecht zu ihm angeordneten Führungssteg 28 versehen, dessen Querschnitt im wesentlichen dem Querschnitt des Führungskanals 20 entspricht. Der Führungssteg 28 ist an seiner Innenseite mit einem Rastvorsprung 29 versehen (vgl. auch Fig. 8), dessen Querschnitt etwas größer als die Breite des Schlitzes 21 (Fig. 5, 6) in dessen zwischen den Rastmulden 22 befindlichen Abschnitten ist.

Wie insbesondere Fig. 9 zeigt, wird der Führungssteg 28 von unten her und vorzugsweise mit geringer Spielpassung in den Führungskanal 20 des Schutzglashalters 6 eingeführt und dann in diesem parallel zum Mittelsteg 15 auf- und niederbewegt werden (Pfeil v in Fig. 9), um dadurch einerseits den Korrekturglashalter 24 auf der Innen- bzw. Rückseite des Schutzglashalters 6 anzuordnen, andererseits die vertikale Lage bzw. die Höhenlage des Korrekturglashalters 24 relativ zum Schutzglashalter 6 einzustellen. Der Rastvorsprung 29 spreizt dabei den Schlitz 21 der Führung 19 etwas elastisch auf, wozu die den Schlitz 21 bildenden Teile vorzugsweise aus einem ausreichend elastischen, flexiblen Material, insbesondere einem Kunststoff hergestellt sind, und gleichzeitig durchläuft der Rastvorsprung 29 nacheinander die übereinander liegenden Rastmulden 22. Ist die gewünschte Höheneinstellung aufgefunden, wird der Rastvorsprung 29 in der erreichten Position durch die betreffende Rastmulde 22 verrastet bzw. festgelegt. Der durch die Rastmulden 22 und den Rastvorsprung 29 gebildete Lochraster-Mechanismus ermöglicht dabei nicht nur zahlreiche unterschiedliche Höheneinstellungen des Korrekturglashalters 24 relativ zum Schutzglashalter 6, sondern bildet gleichzeitig auch ein Mittel zur Befestigung des Korrekturglashalters 24 auf der Innen- bzw. Rückseite des Schutzglashalters 6. Dabei ist klar, daß dieser Mechanismus, der Schutzglashalter 6 und das Schutzglas 10 derart nach vorn gewölbt und aufeinander abgestimmt sein müssen, daß im eingebauten Zustand des Korrekturglashalters 24 und bei allen herstellbaren Höheneinstellungen die Korrekturgläser 5 stets den normalen Abstand von den Augen des Trägers der Kombinationsbrille haben.

Die erfindungsgemäße Kombinationsbrille ermöglicht es, die Korrekturgläser 5 bei unverändert getragenem Schutzglashalter 6 nach oben und unten zu verschieben. Muß daher ein Sportler, insbesondere ein Radrennfahrer, aufgrund seiner Körperhaltung immer relativ weit nach oben sehen (Pfeil 3 in Fig. 1), dann kann er den Korrekturglashalter 24 und mit ihm die Korrekturgläser 5 so weit nach oben schieben, daß er auch bei der durch die besondere Körper- bzw. Kopfhaltung erzwungenen Sicht im wesentlichen durch die optischen Zentren der Korrekturgläser 5 blickt. Dies ist in Fig. 1 durch eine mit gestrichelter Linie 5a angedeutete, nach oben verschobene Lage der Korrekturgläser 5 schematisch dargestellt. Eine solche Einstellung der Korrekturgläser 5 kann ein Radrennfahrer z. B. bereits vor Fahrtantritt vornehmen, da seine Position auf dem Rennrad bekannt ist. Nach Beendigung der Fahrt kann der Korrekturglashalter 24 nach unten geschoben werden, bis sich wieder eine normale Geradeaus-Sicht ergibt.

Die Erfindung bringt zahlreiche Vorteile mit sich. Neben den bereits genannten Vorteilen des stets gleichen Sitzes des Schutzglashalters 6 am Kopf seines Trägers und der Verschiebbarkeit des Korrekturglashalters 24 sind insbesondere das dadurch verbesserte Sehvermögen bei unterschiedlichen Körperhaltungen und die Vermeidung von Unfallgefahren zu nennen. Vorteilhaft ist auch, daß die Durchmesser der Korrekturgläser 5, zumindest in vertikaler Richtung, so klein gehalten werden können, wie für ein gutes Umfeldsehen bei Geradeaus-Sicht gerade noch vertretbar ist, was in Verbindung mit einem entsprechend kleinen Korrekturglashalter 24 zu einer deutlichen Gewichtsersparnis führt. Weiter bringt der nach oben verlegte Quersteg 7 des Schutzglashalters 6 keine Einschränkung des Gesichtsfelds mehr mit sich, und die verbesserte Schweißabsaugung sorgt dafür, daß auch weniger Sichtbehinderungen durch Schweißabsonderungen eintreten.

Als Materialien für die beschriebenen Teile der Kombinationsbrille können alle für diese Zwecke üblichen Materialien wie z. B. Kunststoff oder Metall für die Halter 6, 24 und z. B. Kunststoff oder Glas für die Gläser 5, 10 verwendet werden, wobei insbesondere die Schutzgläser 10 auch beliebig getönt sein können.

Die Erfindung ist nicht auf das beschriebene Ausführungsbeispiel beschränkt, das auf vielfache Weise abgewandelt werden kann. Dies gilt insbesondere für die Form und/oder die spezielle Kontruktion der Halter 6 und 24, die auch anders als dargestellt sein können. Unter der Bezeichnung "Halter" sollen dabei alle Träger für Schutz- oder Korrekturgläser unabhängig davon verstanden werden, ob sie als umlaufende Einfassungen bzw. Rahmen oder als einfache Stege, Klammem od. dgl. ausgebildet sind. Dasselbe gilt für die Seitenbügel 9, die vorzugsweise in der Länge verstellbar sind. Außerdem könnte die erhöhte Lage des Querstegs 7 des Schutzglashalters 6 auch ganz oder teilweise durch eine entsprechende Formgebung für die Seitenbügel 9 erreicht werden. Weiter kann das Schutzglas 10 in an sich bekannter Weise aus einem glasklaren Material bestehen, gegen ein zweites getöntes Schutzglas über einen flexiblen Mechanismus der aufnehmenden Fassung austauschbar sein oder mit Druckknöpfen od. dgl. zum Aufclipsen mit einem zweiten, getönten Schutzglas kombiniert werden. Schließlich versteht sich, daß die einzelnen Merkmale der erfindungsgemäßen Kombinationsbrille auch in anderen als den dargestellten und beschriebenen Kombinationen angewendet werden können.

## Patentansprüche

1. Kombinationsbrille mit einem zwei Seitenbügel (9) aufweisenden Schutzglashalter (6), an dem eine zu seiner Positionierung bestimmte Nasenstütze (14, 15, 16) befestigt ist, einem auf der Rückseite des Schutzglashalters (6) angeordneten Korrekturglashalter (24), und einem Mechanismus (19 bis 22) zur variablen Höheneinstellung des Korrekturglashalters (24) relativ zum Schutzglashalter (6), **dadurch gekennzeichnet, dass** der Mechanismus (19 bis 22) eine an einem mittleren Teil des Schutzglashalters (6) angebrachte Führung (19) und einen in der Führung (19) verschiebbar gelagerten, von unten her in die Führung einführbaren an einem mittleren Teil des Korrekturhalters (24) befestigten Führungssteg (28) enthält und die Führung (19) und der Führungssteg (28) mit zusammenwirkenden Rastmitteln (22, 29) versehen sind.

2. Kombinationsbrille nach Anspruch 1, **dadurch gekennzeichnet, daß** der Schutzglashalter (6) einen Anlenkstellen (8) der Seitenbügel (9) verbindenden Quersteg (7) aufweist, der zur Anlage an einer oberhalb der Augenbrauen (17) liegenden Stelle der Stirn ausgebildet und eingerichtet ist.

3. Kombinationsbrille nach Anspruch 2, **dadurch gekennzeichnet, daß** der Quersteg (7) zumindest in einem mittleren Abschnitt gegenüber den Anlenkstellen (8) für die Seitenbügel (9) erhöht angeordnet ist.

4. Kombinationsbrille nach Anspruch 2 oder 3, **dadurch gekennzeichnet, daß** der Quersteg (7) an seiner Innenseite mit einer saugfähigen Auflage (18) versehen ist.

5. Kombinationsbrille nach Anspruch 4, **dadurch gekennzeichnet, daß** sich die Auflage (18) nur über einen mittleren Abschnitt des Querstegs (7) erstreckt.

## Claims

1. Combination spectacles with a protective lens holder (6) having two side arms (9), on which holder a nose support piece (14, 15, 16) intended for its positioning is fastened, with a correction lens holder (24) arranged on the rear side of the protective lens holder (6), and a mechanism (19 to 22) for variable height adjustment of the correction lens holder (24) relative to the protective lens holder (6), **characterised in that** the mechanism (19 to 22) contains a guide means (19) attached to a central portion of the protective lens holder (6) and a guide bar (28), which is displaceably disposed in the guide means (19), can be inserted from below into the guide means and is fastened to a central portion of the correction lens holder (24), and the guide means (19) and the guide bar (28) are provided with cooperating locking elements (22, 29).

2. Combination spectacles according to Claim 1, **characterised in that** the protective lens holder (6) has a cross bar (7), which connects hinge points (8) of the side arms (9) and is configured and arranged to rest against a point of the forehead located above the eyebrows (17).

3. Combination spectacles according to Claim 2, **characterised in that** the cross bar (7) is arranged, at least in a central section, to be raised relative to the hinge points (8) for the side arms (9).

4. Combination spectacles according to Claim 2 or 3, **characterised in that** the cross bar (7) is provided with an absorbent coating (18) on its inside.

5. Combination spectacles according to Claim 4, **characterised in that** the coating (18) only extends over a central section of the cross bar (7).

## Revendications

1. Lunettes combinées, comprenant un support de verres protecteurs (6) présentant deux branches (9), sur lequel est fixé un appui nasal (14, 15, 16) destiné à positionner ledit support, un support de verres correcteurs (24) situé derrière le support de verres protecteurs (6) et un mécanisme (19 à 22) pour régler en hauteur le support de verres correcteurs (24) par rapport au support de verres protecteurs (6), **caractérisées en ce que** le mécanisme (19 à 22) comprend un guide (19) fixé sur un élément central du support de verres protecteurs (6) et un curseur (28) fixé sur un élément central du support de verres correcteurs (24), qui peut être inséré dans le guide (19) par le bas de celui-ci et peut se déplacer dans ce dernier, et **en ce que** le guide (19) et le curseur (28) sont dotés de moyens d'enclenchement (22, 29) coopérant entre eux.

2. Lunettes combinées selon la revendication 1, **caractérisées en ce que** le support de verres protecteurs (6) présente une barre transversale (7) reliant les charnières (8) des branches (9), qui est réalisé et disposé de manière à venir s'appliquer contre un point du front situé au-dessus des sourcils (17).

3. Lunettes combinées selon la revendication 2, **caractérisées en ce que** la barre transversale (7) est rehaussée par rapport aux charnières (8) des branches (9) au moins dans une partie centrale.

4. Lunettes combinées selon la revendication 2 ou 3, **caractérisées en ce que** la barre transversale (7) est dotée sur sa face intérieure d'un support absorbant (18).

5. Lunettes combinées selon la revendication 4, **caractérisées en ce que** le support (18) ne s'étend que sur une partie centrale de la barre transversale (7).
